(19)

Europäisches
Patentamt
European
Patent Office
Office européen
des brevets

(11)     **EP 3 045 235 A1**

(12)                                   **EUROPEAN PATENT APPLICATION**

(43) Date of publication:
     **20.07.2016   Bulletin 2016/29**

(51) Int Cl.:
     *B09B 3/00* (2006.01)          *B09B 5/00* (2006.01)
     *B29B 17/02* (2006.01)         *H01M 10/54* (2006.01)

(21) Application number: **15195286.8**

(22) Date of filing: **19.11.2015**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**
     Designated Extension States:
     **BA ME**
     Designated Validation States:
     **MA MD**

(30) Priority:  **14.01.2015   JP 2015005160**

(71) Applicant: **Panasonic Intellectual Property
     Management Co., Ltd.
     Osaka-shi, Osaka 540-6207 (JP)**

(72) Inventors:
     • **HIGUCHI, Katsuhiro**
       **Osaka, 540-6207 (JP)**
     • **IWABUCHI, Hiroshi**
       **Osaka, 540-6207 (JP)**

(74) Representative: **Vigand, Philippe et al
     Novagraaf International SA
     3 chemin de l'Echo
     1213 Onex Geneva (CH)**

(54)    **METHOD FOR SEPARATING A BATTERY**

(57)     In a method for separating a battery (c), an object (a) in which a battery (c) is included in a case (b) made of a resin is heated to a temperature equal to or greater that a heat resistant temperature of the resin, and less than a molding temperature of the resin. The case made of the resin and the battery are separated from the object by applying shearing force to the heated object .

*FIG. 1*

## Description

TECHNICAL FIELD

The present invention relates to a method for separating a resin case and a battery from an object such as home appliances including the resin case in which the battery is included, without destroying the battery.

BACKGROUND ART

Recent economic activities of mass production, mass consumption and mass wasting causes global-scale environmental problems, such as global warming or a depletion on resources. In such a situation, in order to construct recycling-orientated societies, a home appliances recycling law is enforced in Japan, such that at the end of the service life of an air conditioner, television, refrigerator, freezer, and washing machine, the appliances are required to be recycled. In addition, since April 2013, in Japan, a small size home appliances recycling law is enforced, whereby the range of objects to be recycled has been increased. For this reason, a recycling technology, which performs recycling more efficiently, is required.

As described above, various products of general home appliances become the object to be recycled. Among these products, when a secondary battery is not removed at the time of discarding the object including the secondary battery, such as a mobile phone, a personal computer, or an electric shaver, there is a concern that the secondary battery may ignite or explode. For this reason, before crushing the object at the end of its service life at a recycle factory, it is required to remove the secondary battery by hand. Since this work is not efficient and labor costs are expensive, a technology for efficiently separating the internal battery from the home appliances is desired.

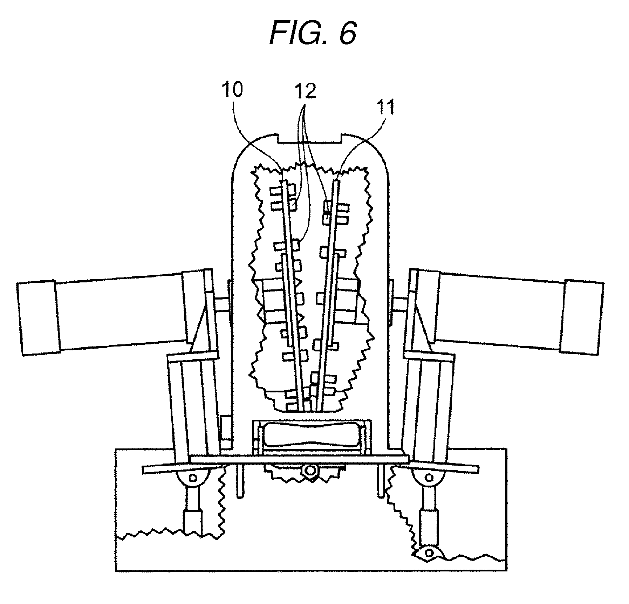

As a crushing machine of small sized home appliances in the related art, a disassembling apparatus capable of disassembling a mobile phone or the like into a circuit board and a case has been proposed. Fig. 6 is a schematic diagram of the disassembling apparatus in the related art disclosed in Japanese Patent No. 5540202.

This apparatus includes disks 10 and 11. The distance between disks 10 and 11 provided in an upper part of the apparatus is larger than the distance between them provided in a lower part, and the mobile phone is inserted from the upper part where the distance is large. The inserted mobile phone is caught by disks 10 and 11 during falling, and receives a pressurizing force by disks 10 and 11. Each of disks 10 and 11 is provided with a plurality of protrusions 12 on surfaces thereof facing each other. In addition, since disk 10 and disk 11 are rotated in reverse directions of each other, shearing force is applied to the mobile phone sandwiched between protrusions 12, and the circuit board and the case of the mobile phone are separated. The separated circuit board and case are discharged from the lower part with the small distance between disks 10 and 11, and are collected.

SUMMARY OF THE INVENTION

The present invention provides a method for separating a resin case and a battery from an object in which the battery is included in the resin case, without destroying the battery.

According to a method for separating a battery, of an aspect of the present invention, an object including a case made of a resin in which a battery is housed is heated to a temperature equal to or greater than a heat resistant temperature of the resin constituting the case, and less than a molding temperature of the resin, and the case made of the resin and the battery are separated from the object by applying shearing force to the heated object.

According to the separation method, the resin case and the battery can be separated from the object without destroying the battery.

BRIEF DESCRIPTION OF DRAWINGS

Fig. 1 is a schematic configuration diagram of a separation apparatus according to an embodiment of the present invention.
Fig. 2 is a diagram illustrating a relationship between a maximum projection area of an object and shearing force needed for separating a resin case in the embodiment of the present invention.
Fig. 3 is a diagram illustrating a temperature rise curve at the time of heating the object using a muffle furnace as a furnace of the separation apparatus illustrated in Fig. 1.
Fig. 4 is a diagram illustrating the temperature rise curve at the time of heating the object using a superheated steam furnace as the furnace of the separation apparatus illustrated in Fig. 1.
Fig. 5 is a schematic configuration diagram of another separation apparatus in the embodiment of the present invention.
Fig. 6 is a schematic diagram of the disassembling apparatus in the related art.

DESCRIPTION OF EMBODIMENTS

Prior to describing an embodiment of the present invention, problems in the related art will be described simply. In a method using a disassembling apparatus illustrated in Fig. 6, if small sized home appliances are processed without removing the battery, the battery gets stuck in protrusions 12 of disks 10 and 11 so as to receive large loads. Therefore, the battery may be destroyed, and ignites or explodes.

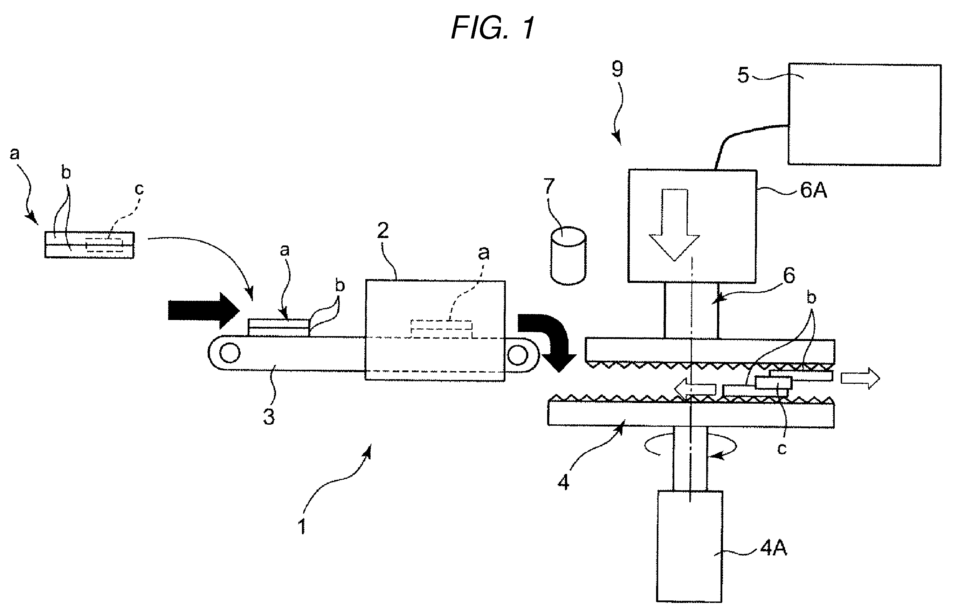

Hereinafter, the embodiment of the present invention will be described with reference to drawings. Fig. 1 is a schematic configuration of separation apparatus 1 according to the embodiment of the present invention.

Separation apparatus 1 includes furnace 2 as an example of a heating apparatus and shearing force applying apparatus 9. Further, separation apparatus 1 includes belt conveyer 3 as an example of a transportation apparatus configured to transport object "a", and sensor 7 configured to sense object "a".

Shearing force applying apparatus 9 includes rotation driving device 4A such as a motor, lower disk 4, load controller 5, upper disk lifting device (hereinafter, lifting device) 6A, and upper disk 6. Rotation driving device 4A rotates lower disk 4. Lifting device 6A has a cylinder and the like, and is load-controlled by load controller 5. Lifting device 6A moves upper disk 6 vertically under a load controlling by load controller 5. Inside surfaces of lower disk 4 and upper disk 6 are provided with a plurality of protrusions, respectively. Alternatively, the inside surfaces of lower disk 4 and upper disk 6 are rough surfaces. Therefore, at the time of rotating lower disk 4, shearing force is surely applied to object "a". In addition, a diameter of lower disk 4 is larger than that of upper disk 6. Belt conveyer 3 can supply object "a" to a part of lower disk 4 exposed from upper disk 6.

Shearing force applying apparatus 9 applies the shearing force to object "a" by relatively moving upper disk 6 and lower disk 4 toward each other, in a state in which object "a" is sandwiched between lower disk 4 and upper disk 6. Specifically, one of lower disk 4 and upper disk 6 is rotated so that shearing force is applied to object "a", and resin case "b" and inside battery (hereinafter, battery) "c" are separated from object "a".

In addition, object "a" is a home appliance which has resin case "b" and battery "c", and in the present embodiment, as an example, object "a" is assumed to be an electric toothbrush, a mobile phone, or a digital camera including an ABS (acrylonitrile butadiene styrene) resin case. Furnace 2 is, for example, a muffle furnace, and sensor 7 is, for example, an infrared ray sensor.

In separation apparatus 1, object "a" on belt conveyer 3 is transported by belt conveyer 3 and is inserted into furnace 2.

Next, in furnace 2, object "a" is heated to a temperature equal to a heat resistant temperature or greater and less than a molding temperature of a material of resin case "b", and less than a heat resistant temperature of battery "c". Therefore, resin case "b" becomes softened. Since such resin case "b" becomes softened, resin case "b" can be separated from object "a" with a force less than a load resistance of battery "c". The resin constituting resin case "b" indicates a resin which becomes softened at the time of being heated to a temperature equal to the heat resistant temperature or greater and less than the molding temperature, among the materials of resin case "b".

After softening resin case "b" in furnace 2, object "a" is transported by belt conveyer 3, and is inserted from belt conveyer 3 into a part of lower disk 4 exposed from upper disk 6. At this time, sensor 7 detects inserted object "a". If sensor 7 does not detect object "a", a subsequent process is not performed. That is, lower disk 4 does not need to be rotated.

Next, rotation driving device 4A rotates lower disk 4, and object "a" is rotated and moved to a machining position (for example, position near right end in Fig. 1). Then, lifting device 6A moves upper disk 6 downward toward lower disk 4. Also, based on the load controlling by load controller 5 with a force less than a load resistance of battery "c", lower disk 4 and upper disk 6 sandwich object "a". In a state in which object "a" is sandwiched between lower disk 4 and upper disk 6 and upper disk 6 is stopped, rotation driving device 4A rotates lower disk 4. By shearing force generated between lower disk 4 and upper disk 6 due to rotation, resin case "b" and battery "c" are safely separated from object "a" without destroying battery "c".

Meanwhile, object "a" is mounted on lower disk 4 with its surface having the maximum projection area where a posture of object "a" is most stabilized.

As an example, in a case in which object "a" is an electric toothbrush, a mobile phone, or a digital camera including ABS resin case "b" as described above, furnace 2 heats resin case "b" so as to become at 170°C. Then, lower disk 4 and upper disk 6 sandwich object "a", and resin case "b" is separated from object "a" by rotating lower disk 4.

Herein, a relationship between shearing force needed for separating resin case "b" and battery "c" from object "a", and the maximum projection area of object "a" is examined. In object "a" supplied to an examination, the maximum projection area of the electric toothbrush is 2250 mm$^2$, that of the mobile phone is 5000 mm$^2$, and that of the digital camera is 8400 mm$^2$.

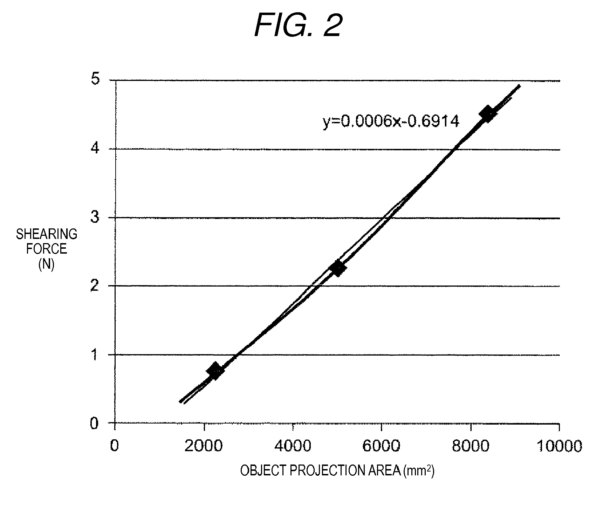

Fig. 2 illustrates a relationship between the maximum projection area of object "a" and shearing force needed for separating resin case "b" from object "a". That is, Fig. 2 illustrates the minimum shearing force needed for separating resin case "b" from object "a", immediately after softening resin case "b" by heating object "a" including resin case "b" using furnace 2. In resin case "b" in which the maximum projection area is 2250 mm$^2$, 5000 mm$^2$, and 8400 mm$^2$, respectively, the minimum shearing force is respectively 0.66N, 2.31N, and 4.35N. In a plot of such data, minimum shearing force Fu (N) is calculated by Expression (1) where S (mm$^2$) is defined as the maximum projection area of object "a".

$$Fu = 0.0006S - 0.6914 \ldots (1)$$

Also, shearing force F for stably separating resin case "b" and battery "c" from object "a" without destroying battery "c" inside object "a", needs to satisfy a condition illustrated in Expression (2), where Fw is defined as a load resistance of battery "c".

$$0 < Fu \leq F < Fw \ldots (2)$$

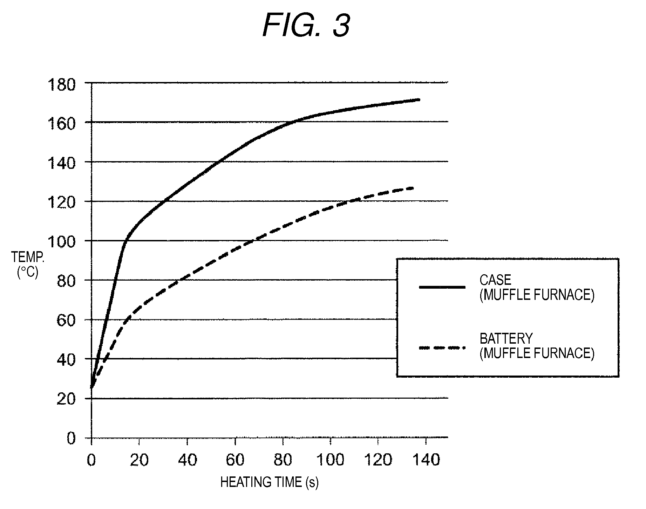

Fig. 3 illustrates a temperature rise curve at the time of heating the mobile phone using the muffle furnace of 200°C as an example of furnace 2. As illustrated in Fig. 3, when the mobile phone with the ABS resin case is heated for two minutes using the muffle furnace, the temperature of resin case "b" becomes 170°C, and the temperature of battery "c" becomes 125°C. The heat resistant temperature and the molding temperature of the ABS resin are respectively 100°C and 180°C, and the heat resistant temperature of battery "c" is 130°C. Therefore, the temperatures of resin case "b" and battery "c" are in a set temperature range of object "a" described above by being heated by the muffle furnace for two minutes.

In the present embodiment, the mobile phone on belt conveyer 3 is heated using the muffle furnace for two minutes, and immediately after that, the mobile phone is inserted from belt conveyer 3 to lower disk 4, and the infrared ray sensor detects the inserted mobile phone. Subsequently, the mobile phone is positioned at the machining position by rotating lower disk 4. Then, by moving upper disk 6 downward, the mobile phone is sandwiched between lower disk 4 and upper disk 6. Next, only lower disk 4 is rotated with respect to upper disk 6, and a shearing force of 10N is applied to the mobile phone. With such an operation, it is confirmed that resin case "b" and battery "c" can be separated from the mobile phone.

In addition, even when the electric toothbrush or the digital camera is used as object "a" in the above described condition, it is confirmed that resin case "b" and battery "c" can be separated from object "a" in the same way.

Moreover, a superheated steam furnace is used as furnace 2, instead of the muffle furnace, and thus the temperature of resin case "b" can be rapidly raised.

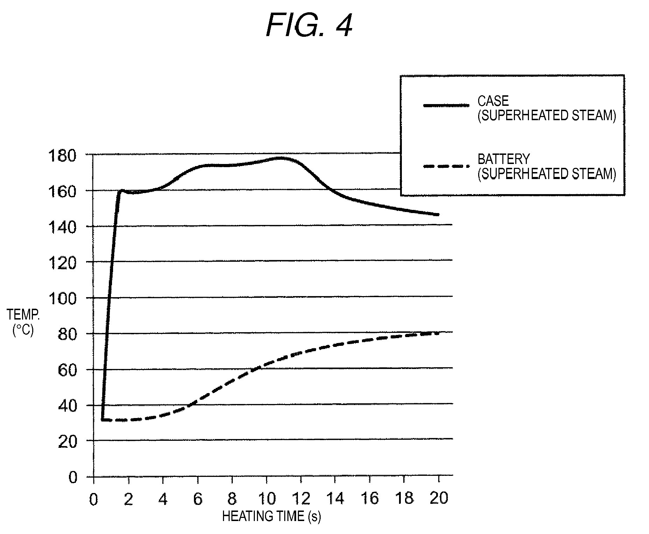

Fig. 4 illustrates the temperature rise curve at the time of heating the mobile phone using the superheated steam furnace of 300°C. As illustrated in Fig. 4, when the mobile phone with the ABS resin case is heated using superheated steam for 1.5 seconds, the temperature of resin case "b" becomes 160°C, and the temperature of battery "c" becomes 30°C. Even in this case, the temperatures of resin case "b" and battery "c" are in the set temperature range of object "a" as described above.

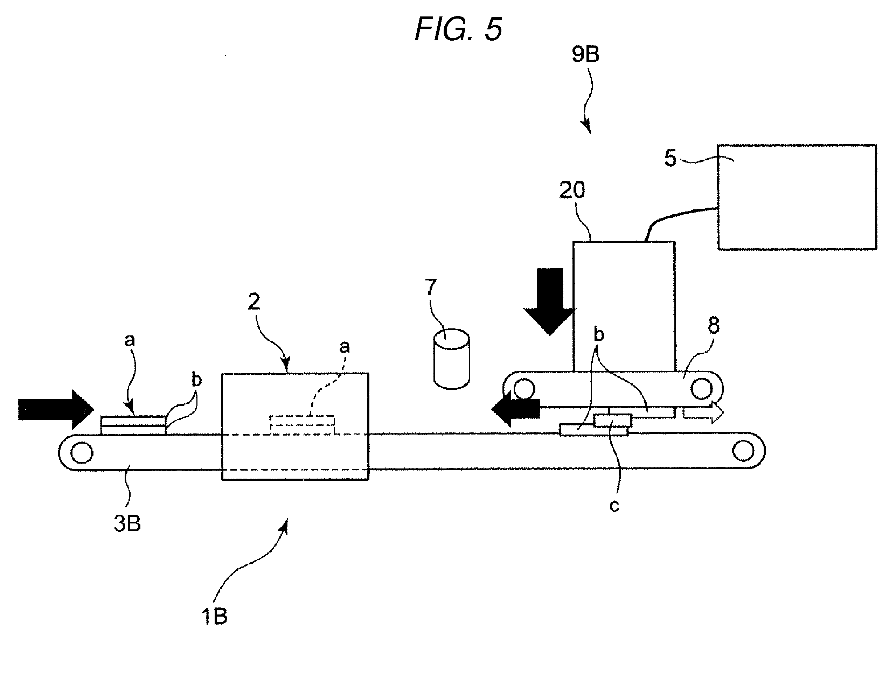

Fig. 5 is a schematic diagram of separation apparatus 1B using upper belt conveyer 8 instead of upper disk 6. As just described, belt conveyer 3B longer than belt conveyer 3, and upper belt conveyer 8 which moves in the reverse direction of belt conveyer 3B instead of upper disk 6 can be used as shearing force applying apparatus 9B.

Belt conveyer 3B is disposed through the entire length of a processing mechanism. Furnace 2 is disposed in one end side of belt conveyer 3B in the same way as Fig. 1. In the other end side, upper belt conveyer 8, upper belt conveyer lifting device 20, and load controller 5 are disposed.

In separation apparatus 1B, sensor 7 detects object "a" which comes out from furnace 2 transported by belt conveyer 3B.

Next, after detecting, upper belt conveyer lifting device 20 moves upper belt conveyer 8 downward toward belt conveyer 3B, thereby upper belt conveyer 8 and belt conveyer 3B sandwich object "a".

Then, upper belt conveyer 8 is driven in the direction opposite to that of belt conveyer 3B so that the shearing force is applied to object "a". Resin case "b" and battery "c" can be separated from object "a" by the shearing force.

As described above, according to the present embodiment, a waste home appliance as an example of object "a" in which battery "c" is included therein is heated to a temperature equal to or greater that the heat resistant temperature of a material of resin case "b" of the waste home appliance, and less than the molding temperature so that resin case "b" becomes softened. After that, shearing force is applied to the waste home appliance, and thus resin case "b" and battery "c" can be surely separated from the waste home appliance.

Resin case "b" and battery "c" can be separated from a mixture of resin case "b" and battery "c" thus separated from the waste home appliance by hand or another separation apparatus, and then, resin case "b" can be recycled. Even when separation work is performed by hand, man-hours for the work can be remarkably reduced further than a removal work of the battery by hand before destruction (crushing).

Moreover, by appropriately combining arbitrarily embodiments or modification examples among the above various embodiments or modification examples, effects respectively included therein can be obtained. In addition, a combination of the embodiments, a combination of the examples, or a combination of the embodiments and the examples can be made, and also a combination of features in other embodiments or other examples can be made.

As described above, according to the method for separating a battery of the present invention, the object including the battery therein such as the home appliances is heated so that the resin case becomes softened. The resin case and the battery are separated by shearing force so that the battery can be safely separated without being destroyed. Accordingly, man-hours for removing the battery by hand before destruction can be reduced for recycling home appliances, and recycling can be performed efficiently and labor costs can be reduced.

**Claims**

1. A method for separating a battery, comprising:

   heating an object in which a battery is housed in a case made of a resin to a temperature equal to or greater than a heat resistant temperature of the resin, and less than a molding temperature of the resin; and
   separating the case made of the resin and the battery from the object by applying shearing force to the heated object.

2. The method according to claim 1,
   wherein an expression described below is satisfied,

$$0 < 0.0006\mathrm{S} - 0.6914 \leq \mathrm{F} < \mathrm{Fw}$$

   where F is the shearing force, Fw is a load resistance of the battery, and S is a maximum projection area of the object.

3. The method according to claim 1 or 2,
   wherein at the time of heating the object, a temperature of the battery is less than a heat resistant temperature of the battery.

## FIG. 1

EP 3 045 235 A1

# FIG. 2

y=0.0006x-0.6914

SHEARING FORCE (N) vs OBJECT PROJECTION AREA (mm²)

# FIG. 3

Graph of TEMP. (°C) versus HEATING TIME (s). Legend: CASE (MUFFLE FURNACE) — solid line; BATTERY (MUFFLE FURNACE) — dashed line.

# FIG. 4

FIG. 5

## FIG. 6

Europäisches
Patentamt

European
Patent Office

Office européen
des brevets

## EUROPEAN SEARCH REPORT

Application Number

EP 15 19 5286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 521 242 A2 (MITSUI MINING & SMELTING CO [JP]) 7 January 1993 (1993-01-07) * page 5, line 51 - line 58 * ----- | 1-3 | INV. B09B3/00 B09B5/00 B29B17/02 H01M10/54 |
| X | US 5 252 189 A (CELI ANTONIO M [DE]) 12 October 1993 (1993-10-12) * column 1, line 26 - line 40 * * column 2, line 63 - line 65 * * column 4, line 37 - line 47; claim 6 * ----- | 1-3 | |
| A | "Handling Shear Sensitive Liquids Newtonian and Non-Newtonian Liquids", , 1 January 2007 (2007-01-01), XP055270865, Retrieved from the Internet: URL:http://www.pumpschool.com/applications /Shear.pdf [retrieved on 2016-05-06] * page 1, paragraphs 1,2 * ----- | 1-3 | |
| A | JP 2013 178394 A (NEC SAITAMA LTD) 9 September 2013 (2013-09-09) * figure 1 * ----- | 1-3 | TECHNICAL FIELDS SEARCHED (IPC) B09B B29B B29L B29K H01M |

The present search report has been drawn up for all claims

| Place of search | Date of completion of the search | Examiner |
|---|---|---|
| Munich | 6 May 2016 | Kujat, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 045 235 A1**

## ANNEX TO THE EUROPEAN SEARCH REPORT
## ON EUROPEAN PATENT APPLICATION NO.

EP 15 19 5286

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2016

| Patent document cited in search report | | Publication date | Patent family member(s) | | Publication date |
|---|---|---|---|---|---|
| EP 0521242 | A2 | 07-01-1993 | EP | 0521242 A2 | 07-01-1993 |
| | | | JP | H057860 A | 19-01-1993 |
| US 5252189 | A | 12-10-1993 | CA | 2058528 A1 | 25-06-1993 |
| | | | DE | 4020227 A1 | 02-01-1992 |
| | | | FR | 2685548 A1 | 25-06-1993 |
| | | | GB | 2262648 A | 23-06-1993 |
| | | | US | 5252189 A | 12-10-1993 |
| JP 2013178394 | A | 09-09-2013 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 5540202 B